Europäisches Patentamt

European Patent Office

Office européen des brevets

(19)

(11) Publication number: **0 189 933 B1**

## EUROPEAN PATENT SPECIFICATION

(12)

(45) Date of publication of patent specification: **21.11.91**

(51) Int. Cl.⁵: **G11B 7/09**

(21) Application number: **86101280.5**

(22) Date of filing: **31.01.86**

(54) Servo system of storage apparatus for controllably projecting an optical beam to an optical disk.

(30) Priority: **31.01.85 JP 18035/85**

(43) Date of publication of application:
**06.08.86 Bulletin 86/32**

(45) Publication of the grant of the patent:
**21.11.91 Bulletin 91/47**

(84) Designated Contracting States:
**DE FR GB IT NL**

(56) References cited:
**FR-A- 2 489 574**

**PATENT ABSTRACTS OF JAPAN, vol. 7, no. 73 (P-186)[1218], 25th March 1983; & JP - A - 58 3140 (MANSEI KOGYO) 08-01-1983**

**PATENT ABSTRACTS OF JAPAN, vol. 9, no. 221 (P-386)[1944], 7th September 1985; & JP - A - 60 79537 (SONY) 07-05-1985**

**PATENT ABSTRACTS OF JAPAN, vol. 8, no. 179 (P-295)[1616], 17th August 1984; & JP - A - 59 71135 (SEIKO) 21-04-1984**

**PATENT ABSTRACTS OF JAPAN, vol. 9, no. 308 (P-410)[2031], 4th December 1985; & JP - A - 60 138 748 (TOSHIBA) 23-07-1985**

(73) Proprietor: **FUJITSU LIMITED**
**1015, Kamikodanaka Nakahara-ku**
**Kawasaki-shi Kanagawa 211(JP)**

(72) Inventor: **Arai, Shigeru**
**7-6, Yamanone 1-chome**
**Zushi-shi Kanagawa, 249(JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**W-8000 München 22(DE)**

## Description

The present invention relates to an optical storage apparatus as is defined in a preamble of claim 1.

Optical storage systems of the aforementioned type are generally known (JP-A-58003140;). The said known optical storage systems have, however, defects referred to as an "exterior disturbance", which will be discussed later.

In an optical storage device, information is stored usually in the form of binary signals detectable by scanning a great number of pits formed on the disk, being aligned on circular tracks or in a spiral track, with an optical beam (hereinafter, a laser beam). Optical readout of these signals is accomplished using a laser beam, extremely focused into a small diameter such as 1 $\mu$m, exactly focused onto the surface of the disk, and well-guided onto the tracks. The information is detected by sensing the laser beam reflected at the surface of the disk and modulated by pits formed thereon. The modulation includes such asdiffraction modulation, absorption modulation, and reflection modulation depending on each system of the apparatus.

The pitch of the tracks is substantially small typically 1.6m and the sizes of the pits aligned on the track is also small of 0.1 $\mu$m order such as 0.8 to 1.0 $\mu$m. This results in an extraordinary high signal density of the optical storage medium much higher than that of a magnetic storage medium In order to accomplish exact readout of the signals, a substantially accurate servo system is necessary for centering the laser beam on the tracks. In addition, the eccentricity of the tracks mainly due to the insufficient dimensional preciseness of the disk comes up to an order of 100 $\mu$m. This results in positional cyclic variation of the tracks in the radial direction of the rotating disk causing further difficulty of tracking. As for focusing, there is also another difficulty. In the system, an objective lens with a high numerical aperture such as 0.5 is used in the optical system in order to perceive extremely fine details. This leads to a very small depth of focus such as several $\mu$m. The disk surface, in addition, may differ by an order of 100 $\mu$m from its true surface in the direction vertical to the disk surface owing to some distortion of the disk.

In spite of above difficult conditions, the laser beam must be centered on the track with an accuracy of such as 0.1 $\mu$m order to avoid cross-talking and must be focused onto the surface with an accuracy of approximately 0.5 $\mu$m, for instance. Thus an accurate servo system for centering and focusing the laser beam on the track of the optical disk becomes a key point of the optical storage apparatus. There have been developed various servo systems for focusing and tracking of an optical beam which are reported references such as 'Optical Redout of Videodisc', in IEEE Transaction C.E., Nov. 1976, on page 304, by C.Bricot et al.

In most focusing servo system, an objective lens for readout and or writein of information is moved for focusing using an electrodynamic coil similar to the ones utilized in a loudspeaker. The driving signals of the servo loop, namely error signals, can be obtained using an optical sensors to which a laser beam reflected on the information carry surface, the disk surface, is projected. Typical optical systems practically used are an astigmatic system and an asymmetric system.

In the astigmatic sensor, error signals are derived by means of an optical system having a cylindrical lens placed on the path of the reflected laser beam and four photosensors connected by pairs to differential amplifiers. With this system, the number of the optical elements contained in the system is rather large and the system is costly. In the asymmetric sensor, a mask edge is placed on the path of the reflected laser beam to shade a part of the laser beam. Two photosensors connected to a differential amplifier provide error signals. The system is more simple than the preceding one.

Furthermore, optical elements of both systems described above must be assembled with an extremely high accuracy of dimension in its nature, not only in the direction parallel to the surface of the disk, but also in the perpendicular direction thereto, namely in three-dimensions. This affects adversely the cost and quality of the apparatus.

For radial tracking servo systems, there are also several methods depending on the type of modulation of the laser beam. Typically, the radial tracking is accomplished by deflecting the reading laser beam by relevant track error signals. The laser beam is deflected by an electrodynamically actuated tilting mirror.

One example of a conventional system for obtaining error signals is described. With an optical disk using diffraction modulation, namely having pregrooves (guiding track grooves), a single light spot system is applicable to obtain error signals for driving the tilting mirror. When the laser spot is not well centered on the track, an asymmetry of the laser beam intensity occurs, being detected by two photosensors connected to an differential amplifier. This is a simple method referred to as a "push-pull" method, but not applicable to a flat optical disk.

For an optical disk having a flat surface for reflection modulation, another track servo system is used utilizing asymmetric light distribution on two or more photosensors occurring when the track is not well centered.

2

In an optical storage apparatus, particularly in its servo systems, simplification of the system is necessary to improve the performance, quality and reliability of the apparatus. Furthermore, there are some problems inherent to optical systems, providing disturbance caused by small but inevitable optical defects, referred to above as "exterior disturbance", which will be discussed later.

It is an object of the present invention to provide an optical storage apparatus which is simple and easily adjustable to generate focus error signals.

It is another object of the present invention to provide an optical storage apparatus having a simple and easily adjustable optical system simultaneously applicable to obtain focus error signals, track error signals, and read signals.

It is a further object of the present invention to provide a low cost and reliable servo system for an optical storage apparatus.

These objects can be obtained by an optical storage apparatus as is defined in claim 1.

Preferred embodiments of the present invention are defined in the subclaims.

In an optical storage apparatus, an optical beam, usually a laser beam, is controllably focused and centered on a track formed on an optical disk. For controlling the laser beam, an optical servo system is employed. The present invention discloses a simple and easily adjustable optical system for generating focus error signals for driving the servo system. The system has an essentially asymmetric system having a photosensor comprising two sub-photosensors adjacently arranged on a plane and co-possessing a boundary therebetween. Usually, a laser beam from the laser source is masked by an objective lens, resulting in an optical spot falling on the photosensor forming an optical spot at a fixed position. The feature of the present invention is that the center of the spot is displaced from the boundary between the sub-photosensors by a predetermined distance. Consequently, the areas occupied by the spot on each sub-photosensor become different, resulting in different output photoelectric currents from the sub-photosensors. Then, each output current is amplified individually by each amplifier having an adjustable amplification factors. The amplification factors are adjusted to be inversely proportional to the output currents when the laser beam incident on the optical disk is 'in focus' state. As a result, the output current of each amplifier becomes the same value and balanced with each other. Since the focus error signal is taken from the difference of the output currents of both amplifiers, the focus error signal at 'in focus' state becomes zero.

While the spot of the laser beam projected on the photosensor shrinks or expands in size, as the focal point of the laser beam falls on this side or the opposite side of the disk, namely when the laser beam is in 'off focus' states. Since the spot maintains its circular shape and the position of its center is fixed off the boundary of the sub-photosensors, the output of two sub-photosensors becomes unbalanced, and an error signals are outputted from the differential amplifier.

The optical system for obtaining focus error signals by the present invention has many advantages. The number of optical elements contained therein is fairy small in comparison with that of prior art systems, especially that of an astigmatic sensors. In particular, the setting adjustment of the system becomes much easier; the relative position of the laser beam and the photosensor, strictly speaking, the boundary between the two sub-photosensor, is allowed to be set approximately with a fairy high allowance at first, and then at 'in focus' state, the amlification factors of the relevant amplifiers described above are adjusted electrically such that the output currents of both amplifiers become equal, namely the error signal becomes zero. The adjustment is substantially easy,

Furthermore, 'exterior disturbance' caused by diffraction of the laser beam incident on pre-grooves or pits formed on the disk can be remarkably reduced by selecting an appropriate ratio of the above amplification factors. The ratio between 2 to 4 is found most suitable for a practical use. This means that the ratio of the areas of both sub-photosensors occupied by the spot of the laser beam are to be selected between 2 to 4.

So far, a photosensor having two sub-photosensors for focusing servo systems only is discussed. However, by employing a photosensor array in a quadrant matrix having four sub-photosensors, one optical system can function for generating focus error signals, track error signals, and read signals (reproduced stored information signals). This optical system further simplifies the total optical system of the relevant optical storage apparatus, resulting in a remarkable cost reduction. In addition, the quality and the reliability of the apparatus are fairly improved.

These together with other objects, features, and advantages will be subsequently apparent as more fully hereinafter described and claimed, with reference to the accompanying drawings, wherein like numerals refer to like parts.

Fig.1 is a partial perspective view of a structure of an optical disk used through all the embodiments of the present invention;

Fig.2 is a partial block diagram of an optical storage apparatus, illustrating the optical system for its servo means;

Fig.3 is a diagram of an optical system of the apparatus according to Fig.2;

Fig.4(a) is a schematic side view of a focusing system of the apparatus according to Fig.2;

Fig.4(b) to (d) are plan views of a spot of a reflected laser beam formed on the surface of a photosensor, illustrating the variation of its pattern at various focusing states;

Fig.5 is a diagram of an empirical result with the apparatus according to Fig.2, illustrating the relation between defocusing depth and current of focus error signal;

Fig.6 is a diagram of another optical system;

Fig.7 is a schematic plan view of a photosensor and a spot of a laser beam incident thereon in the optical system according to Fig.6, illustrating the relative position between the photosensor and the spot;

Fig.8 is a block diagram of an operation circuit of the optical system according to Fig.6 for processing focus error signals and track error signals;

Fig.9 are figures for discussing an external disturbance caused by the diffraction of a laser beam incident on pregrooves formed on an optical disk;

Fig.10 is a diagram of an empirical result, illustrating the relation between gain ratio and external disturbance;

Fig.11 is a partial diagram of an optical system of a first embodiment, illustrating the mutual relation between a condenser lens and a laser beam incident thereon;

Fig.12 is a plan view, illustrating the mutual relation between the condenser lens and a spot of the laser beam shown in the precedent figure;

Fig.13 (a) to (b) are plan views of a photosensor and a spot of a laser beam incident thereon in the first embodiment, illustrating the patterns of the spot in relation to various focusing states;

Fig.14 is a diagram of an empirical result with the first embodiment, illustrating the relation between deforcusing depth and focus error signals;

Fig.15(a) and (b) are respectively a partial block diagram of an optical system of a second embodiment and a plan view of a spot of a laser beam in focus, incident on a photosensor;

Fig.16(a) and (b) are respectively a partial block diagrams of an optical system of a third embodiment and a plan view of a spot of a laser beam in focus, incident on a photosensor; and

Fig.17(a) and (b) are respectively a partial block diagram of an optical system of a fourth embodiment and a plan view of a spot of a laser beam in focus, incident on a photosensor.

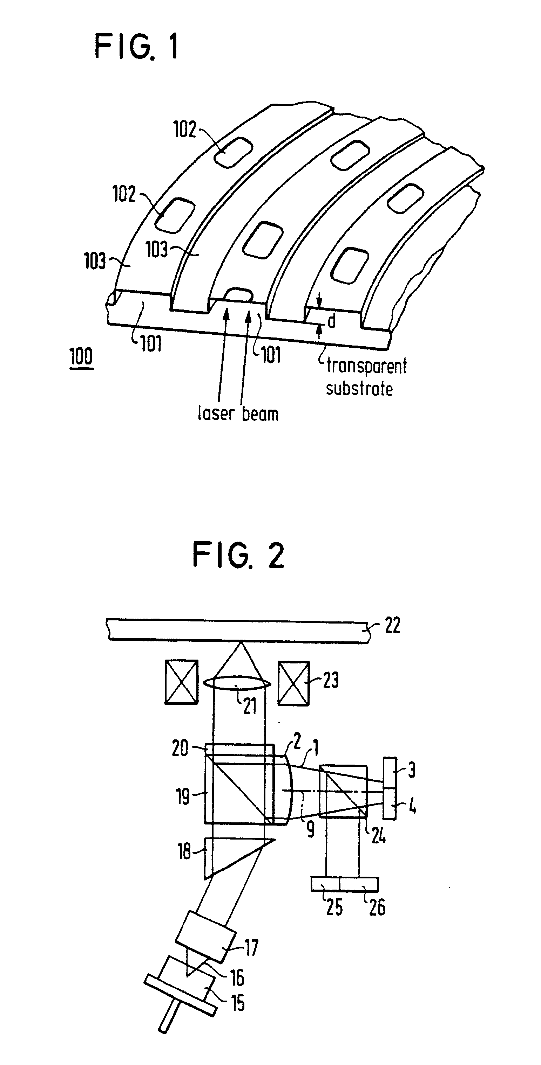

There are various types of servo system for an optical storage apparatus as described above. For simplicity, through all the embodiments of the present invention, the disk of each embodiment is assumed to have a structure as shown in a partial perspective view of Fig.1. The disk 100 comprises a transparent substrate having guiding track grooves, namely pregrooves 101, which may be formed concentric or spiral, having a depth d of 1/8 $\lambda$: hereby $\lambda$ is the wave length of the laser employed. The disk 100 has pits 102 aligned in the pregrooves 101, having a lower reflectivity by 30 to 50 % than that of the other portion 103 of the disk surface. The information signals are obtained by scanning the pits 102 with a laser beam of approximately 1 $\mu$m in diameter, and then by sensing the intensity of the reflected laser beam which changes depending on the presence or the absence of the pits at the reflected point.

Fig.2 is a partial block diagram of an optical storage apparatus which will be explained for achieving a better understanding of the invention. A laser flux 16 emitted from a laser source 15 is collimated by a collimating lens 17 and formed into a laser beam having a circular section through a prism 18. The laser beam is incident on the surface of the optical disk 22 passing through a polarizing beam splitter 19 and a quarter wave length plate 20 and being condensed by an objective lens 21. An actuator 23 involving electromagnetic coils moves the objective lens 21 to focus the laser beam on the surface of the disk 22 and transfers to center the laser beam onto the tracks (not shown). The reflected laser beam comes back passing again through the condenser lens 21 and the quarter wave length plate 20 by which the polarizing plane of the beam is twisted by 90 degrees. Then the laser beam is reflected by the polarizing beam splitter 19 and condensed by a condenser lens 2. The beam is again separated by another beam splitter 24 into two beams. The one beam 1 falls onto a sensor comprising two photosensor 3 and 4 to generate focus error signals and another sensor comprising photosensors 25 and 26 to generate track error signals. Information readout is performed by reading the total current of the photosensor for focus error signals or for track error signals.

The optical system to obtain focus error signals is simplified because no cylindrical lens or no optical mask is used therein. Some focusing systems simply utilizing no cylindrical lenses or optical masks are already disclosed in Japanese laid open patent applications TOKU-KAI SHO-59-139009, published on August 09, 1984 by M.HANAWAKA, and TOKU-KAI SHO-59-186142, published on October 22, 1984 by K.IKEDA. In both applications, the spot on a photosensor always retains a circular shape and the diameter

4

will vary depending the focusing states, namely 'in focus' or 'out of focus' state, of the laser beam. The photosensor is actually separated into two electrically isolated photosensor elements having different area. The reflected optical beam is incident on the photosensor in a decentralized position thereof such that the incident areas of the laser beam on the photosensor become equal when the original laser beam is 'in focus' onto the disk. As the result, the outputting photosensitive currents of each photosensor element become equal in the state. When the beam is in 'out of focus' state, the balancing of the incident areas (spotted areas) collapses, thus outputting focus error signals. Although this optical system is simple and the number of the optical elements is reduced remarkably in comparison with conventional optical systems, the setting of the photosensor requires an extremely high three-dimensional accuracy, and its sensitivity is also limited due to its geometrical conditions. In particular, these optical systems are applicable only to a focusing of the laser beam, and not to tracking operation.

On the other hand, the focusing systems of the present invention not only allows a less accurate dimensional setting of the photosensor, but also is simultaneously applicable to both focusing and tracking of the laser beam.

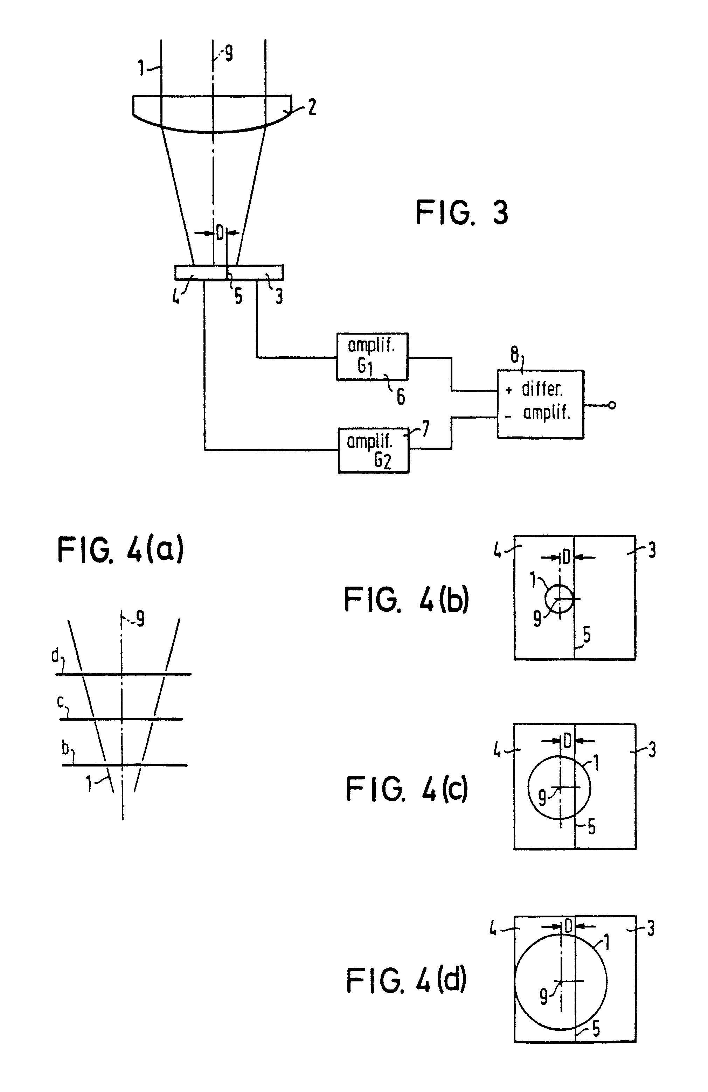

Fig.3 is a block diagram illustrating the focusing system of the apparatus according to Fig.2. Fig.4(a) is a partial side view of the optical system illustrating the relation between the surface of the photosensor and the reflected laser beam incident thereon. Lines b, c, and d represent planes of the surface of the relevant photosensor. Line c corresponds to the state "in focus" and line b and line d correspond to "out of focus" states. The plan views of Fig.4 (b), (c) and (d) schematically illustrate the spot of the reflected beam on the sensors corresponding to the lines b, c, and d of Fig.4(a). It should be noted that the reflected laser beam is not focused on the photosensor when the original laser beam is focused on the optical disk 22.

As shown in Fig.3, photosensor 3 and photosensor 4 are disposed adjacently and electrically isolated to each other on an insulator substrate (not shown). Hereby, the optical axis 9 of the reflected laser beam 1, indicated by a dot-dashed line, and the boundary line 5 between photosensor 3 and photosensor 4 are discrepant from each other by a predetermined distance of D. Photosensor 3 and photosensor 4 are also disposed such that the spot of the laser beam 1 moves along in the direction parallel to the boundary line 5 corresponding to the radial displacement of the original laser beam on the surface of the disk 22 (Fig.2). This is necessary for protecting the focus operation from the disturbance caused by off-tracking, namely, radial displacement of the laser beam.

The state "in focus" is shown by line c in the side view of Fig.4(a) and a circular spot 1 in the corresponding plan view of Fig.4(c). The displacement D between boundary line 5 and the optical axis 9 results in the difference of the incident area of the reflected laser beam on the surface of photosensor 3 and photosensor 4. Therefore, "in focus" state of Fig.4(c), photoelectric currents converted by each sub-photosensor are different from each other; the photocurrent $I_{2f}$ output from photosensor 4 is higher than the photocurrent $I_{1f}$ output from photosensor 3. Then each of the output currents of photosensor 3 and photosensor 4 is amplified respectively by each of amplifiers 6 and 7 having adjustable amplification factor $G_1$ and $G_2$ respectively. At "in focus state", each amplification factor is selected to be $G_{1f}$ and $G_{2f}$ which is inversely proportional to each output current, such that the output currents of both amplifiers 6 and 7 become equal. Therefore, $G_{1f}$ is selected higher than $G_{2f}$. This selection can be obtained easily by an electrical adjustment of relevant amplifiers 6 and 7, and no positional adjustment of the relevant optical system is necessary. Thus the adjustment is much easier than that of the prior art described above.

The output currents of amplifiers 6 and 7 are inputted in a differential amplifier 8, the output current of which becomes zero at "in focus" state.

The states of "out of focus" are shown by horizontal lines b and d in the side view of Fig.4(a) and circular spots 1 in the corresponding plan views of Fig.4(b) and (c). When the focal point of the original laser beam fails to reach the surface of the optical disk 22, the spot of the reflected laser beam formed on the photosensor plane shown by line b of Fig.4(a), becomes a smaller spot circle 1 as shown in Fig.4(b). Although the total current of the photosensor 3 and the photosensor 4 remains almost the same because the total energy of the reflected laser beam incident onto the photosensor is maintained the same, most current is outputted from photosensor 4. Thus the output current of the differential amplifier 8 increases in one polarity. When the focusing of the original laser disk is too deep to the optical disk 22, then the spot 1 on the photosensor becomes large as shown in Fig.4(d). Although the apparent occupying areas on photosensor 3 is still smaller than that of photosensor 4, the output current of photosensor 3 is amplified by $G_{1f}$ times and much higher than that of photosensor 4. The polarity of the output current of the differential amplifier 8 is inverted to the opposite one to that of the preceding one.

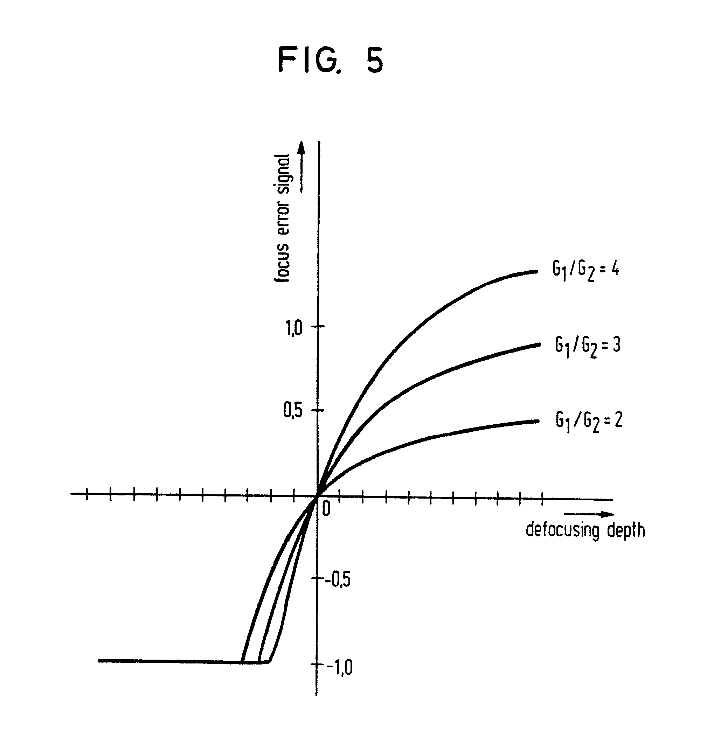

Thus the focusing error signal current is obtained indicating the defocusing depth by its amplitude and defocusing direction by its polarity. A typical experimental results is plotted in a diagram of Fig.5. Herein, the defocusing quantity in $\mu$m is taken along the abscissa and the focusing error signal current in the ordinate. The ratio of the selected amplification factors $R = G_{1f}/G_{2f}$, (hereinafter is referred to as a gain ratio and signified by $R = G_1/G_2$ for simplicity) is taken as a parameter. The higher the gain ratio R is, the higher is the slope of the curve. This means a higher gain ratio provides a higher sensitivity of the error signals. In another words, if the predetermined displacement D is taken larger, the resulting sensitivity of the error signals becomes more sensitive. The horizontal line of the curves found in the fourth quadrant of the diagram simply indicates that the spot circle becomes smaller and finally the full spot area is contained only in photosensor 4 and the current becomes constant. While, the saturating tendency of the curves implies the enlarging spot circle exceeding over the areas of the photosensor 3 and photosensor 4.

It is obvious to those skilled in the art that the above system is applicable to an optical disk having no pregroove (flat disk). However, when the disk has pregrooves for tracking, the system just described has another advantage, which will become apparent later.

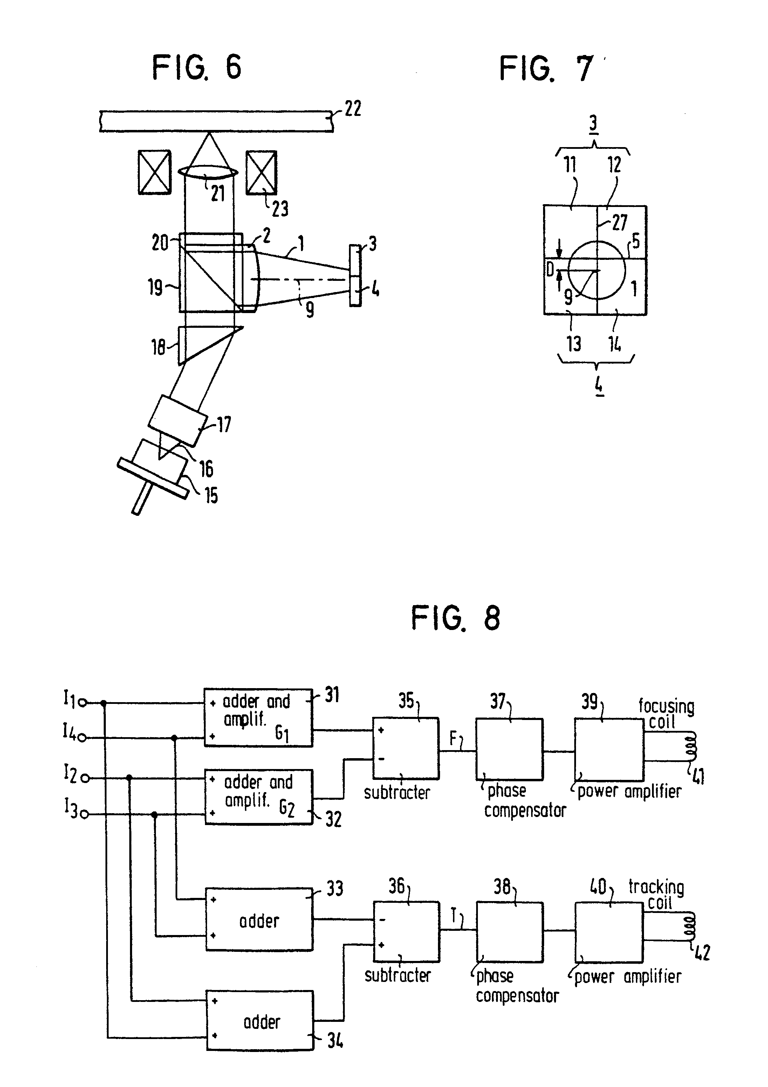

In Fig.6 is shown a block diagram of a further apparatus resp. system which is quite similar to that of Fig.2 except that polarizing beam splitter 24 and photosensor 25 and 26 are removed and photosensor 3 and photosensor 4 are further split into two sub-photosensors 11,12 and 13, 14 respectively, forming a photosensor array in a quadrant matrix, as shown in a plan view of Fig.7. The purpose of the splitting is to obtain both focusing and tracking error signals from the combination of the output currents of sub-photosensors. The sub-photosensors 11 to 14 are isolated electrically from each other. The boundary 27 between the pair of sub-photosensor 11 and 13 and the pair of sub-photosensor 12 and 14 is perpendicular to the boundary 5 between photosensor 3 (sub-photosensor 11 and 12) and photosensor 4 (sub-photosensor 13 and 14). The photosensor array is set such that when the laser beam is centered on a track of the disk 22, in "on track" state, the center 9 of the spot of the reflected laser beam incident on the photosensor array will fall on the boundary 27. In order to adopt the precedent focusing method, the optical axis 9 of the reflected laser beam is positioned again displaced from the boundary 5 by a predetermined distance D. The photosensor array is set again such that the spot 1 moves in the direction in parallel with the boundary 5. Consequently, when the original laser beam moves on the surface of the disk 22 radially, the spot will move perpendicularly to the boundary 27. Since the output current of two pairs of photosensors locating at the both sides of the boundary 27 are balanced when the laser beam is "on track", the "off-tracking" of the original beam will cause the unbalance of output currents of both pairs. Limiting to the tracking means, the principle of the above-described means is a conventional one wherein optical diffraction of the laser beam incident on a pregroove on the disk surface is utilized.

Focus error signal, track error signal, and read signal are obtained through an operation circuit shown in Fig. 8.

The output current of each of sub-photosensors 11 to 14, in this order are signified by $I_4$, $I_1$, $I_2$ and $I_3$ respectively, are inputted into each adder 31 to 34 of the operation circuit of Fig. 8. Output currents $I_1$ and $I_4$ are added by adder 31 to form the total output current of photosensor 4. Similarly output currents $I_2$ and $I_3$ by adder 32 to form that of photosensor 3. Each added output current is amplified by an amplification circuit included in each adder by $G_1$ times and $G_2$ times respectively. The difference of the amplified sums is detected by a subtracter 35 or a differential amplifier and utilized for focusing control in the same manner as that of the first embodiment. Namely, a focusing error signal F is given by

$$F = G_1 (I_1 + I_4) - G_2 (I_2 + I_3) \qquad (1)$$

The amplification factors $G_1$ and $G_2$ are selected such that F becomes zero when the beam is just focused on the surface of the disk. The relation between defocusing depth and focus error signal current F ist quite similar to that shown in Fig. 5. Finally, the output current F is fed to a focusing coil 41 of the actuator 23 through a phase compensator 37 and power amplifier 39.

On the other hand, a track error signal is detected as follows. As described before, when the laser beam is off-tracking, unbalance of the output currents of the pairs of sub-photosensors 11, 13 and 12, 14 occurs, generating a track error signal. The sum of output currents $I_1$ and $I_2$ and that of $I_3$ and $I_4$ are given through adders 34 and 33 respectively. The difference of both sums is detected by a subtracter 36 or a differential amplifier as a track error signal T which is fed through a phase compensator 38 and a power amplifier 40 to a tracking coil 42 of the actuator 23. T is given as

$$T = (I_1 + I_2) - (I_3 + I_4) \qquad (2)$$

Readout signal S is obtained simply summing up the above four output currents (the relevant circuit is an ordinary one and not shown). S is given in the following equation:

$$S = I_1 + I_2 + I_3 + I_4 \qquad (3)$$

Thus, in apparatus according to Fig.6, the focus error signal, the track error signal, and the readout signal can be obtained by one optical system having a photosensor array composed of four sub-photosensors. Moreover, the optical system is very simple including no cylindrical lens, no optical mask, etc., and the adjustment for defining a focusing state is electrically performed and no accurate dimensional adjustment of the optical elements contained is required. This is substantially an advantage.

In addition, with the apparatus just described, there is another advantage that the focus error signal is not affected by an exterior disturbance. The advantage is also the case of the apparatus according to Fig.2 when it has pregrooves for tracking. This will be described as follows:

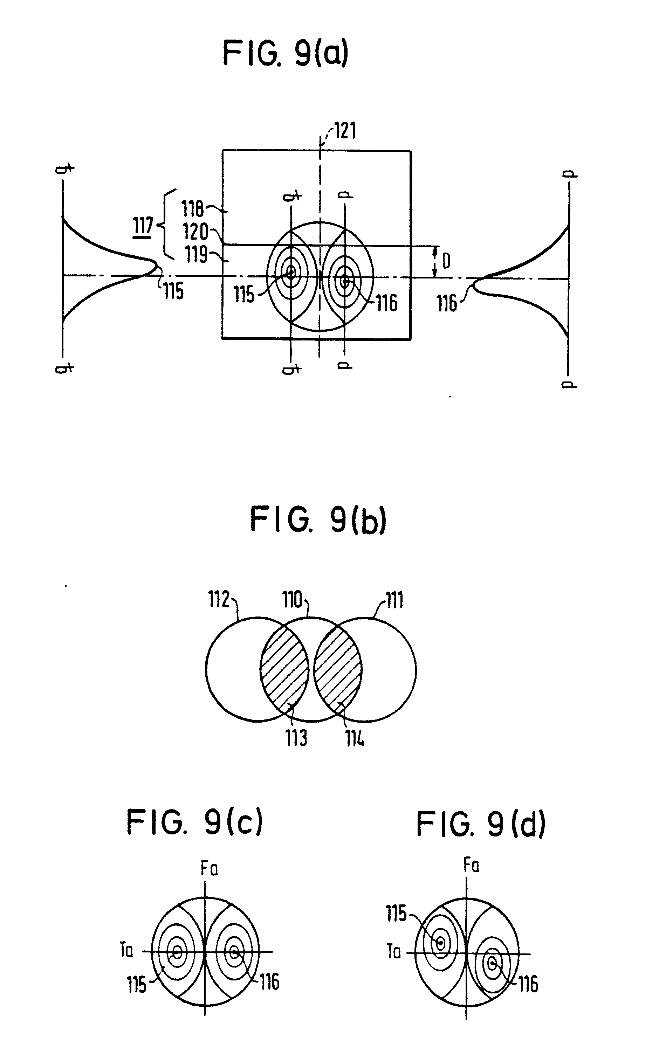

Before discussing the advantage, a brief explanation of the so-called "exterior disturbance" caused by optical diffraction due to the presence of pregrooves will be described in order to clarify the advantage, referring to the drawings Fig.9 (a) to (d). As shown in a schematic plan view of Fig.9(a), a laser beam reflected on a pregroove is diffracted partially at the disk surface and projects a spot on the plane of a photosensor 117 comprising two sub-photosensor 118 and 119 separated by a boundary 120. Hereby, as shown schematically in Fig.9(b), the spot comprises a spot 110 of a reflected beam of zero-order directly reflected from the surface of the disk and two spots 111 and 112 of diffracted laser beam of positive first-order and minus first-order. The hatched portions 113 and 114 are the area where the reflected laser beams of zero-order and one of the diffracted laser beams of first-order interfere each other, forming Gaussian distribution of the optical intensity. The curves shown on both sides of Fig.9(a), indicate respective Gaussian distributions of optical intensity along lines p-p and q-q.

In view of the operation of focusing servo system, the optical intensity distribution in the spot should be symmetrical with respect to an axis Fa which is perpendicular to the tracking direction Ta. With an ideal optical system, as shown in a plan view of Fig.9(c), the positions of peak points 115 and 116 of the Gaussian distributions are expected to be symmetrically arranged with respect to axis Fa (in focusing direction) of the spot circle and fall on another axis Ta (in tracking direction). When the laser beam is on track, then the peak value of the laser intensity at both peak points 115 and 116 become equal. If the beam is off track, then the peak values become different, one is high and the other is low. The output currents generated at the portions 113 and 114 of Fig.9(b), therefore, become up and down depending on the direction of off-tracking of the laser beam on the disk, inward or outward. Thus, track error signals are obtained by detecting the difference between the both currents. This method is referred to as a "push-pull" method as described before.

However, in practice, elements of the optical system contains some optical defects, even though they are minor ones, such as the imperfect flatness of the surfaces of the associated mirror, prism, polarized beam splitter, quarter wave length plate, etc. or tiny misalignment of the optical elements occurred during the assembly process and the like. As a result, the accumulated effects of the minor defects causes the deviation of the peak points 115 and 116 from axis Ta in the mutually opposite sides. Naturally, this leads to unbalance of the optical intensity distribution with respect to Fa axis as shown in Fig.9(d).

Assuming that photosensor 117 is set such that the boundary 120 is displaced from Ta axis of the spot by the distance D, then the output currents of sub-photosensor 118 and 119 are affected by the above-described unbalanced distribution of the optical intensity of the laser beam depending on the value of D. For understanding, the extreme case, namely D = 0, is discussed. Apparently, the peak point 115 falls on sub-photosensor 118 and the peak point 116 on the sub-photosensor 119. The difference of the output currents from the sub-photosensor 118 and 119 is affected seriously by the alternative up-and-down of the optical intensity of the peak points 115 and 116, which depends on the tracking aspects. Thus, the focus error signal is disturbed by the track error signal. This is referred to as an exterior disturbance and signified by $\delta$, then we have theoretically

$$\delta = \text{constant} \cdot e^{-kD^2} \qquad \ldots\ldots\ldots\ldots\ldots\ldots(4)$$

Hereby, k is a constant. Therefore, the exterior disturbance $\delta$ can be reduced by taking a larger displacement D of the beam spot. In another words, the beam spot is to be incident on the photosensor such that the both peak points of the Gaussian distribution of optical intensity of the beam fall on one of the sub-photosensors. Hereby, this is equivalent to take a higher value of the gain ratio $R = G_1/G_2$. Actually, the

value of R between 2 to 4 is found most appropriate for the practical use as subsequently described.

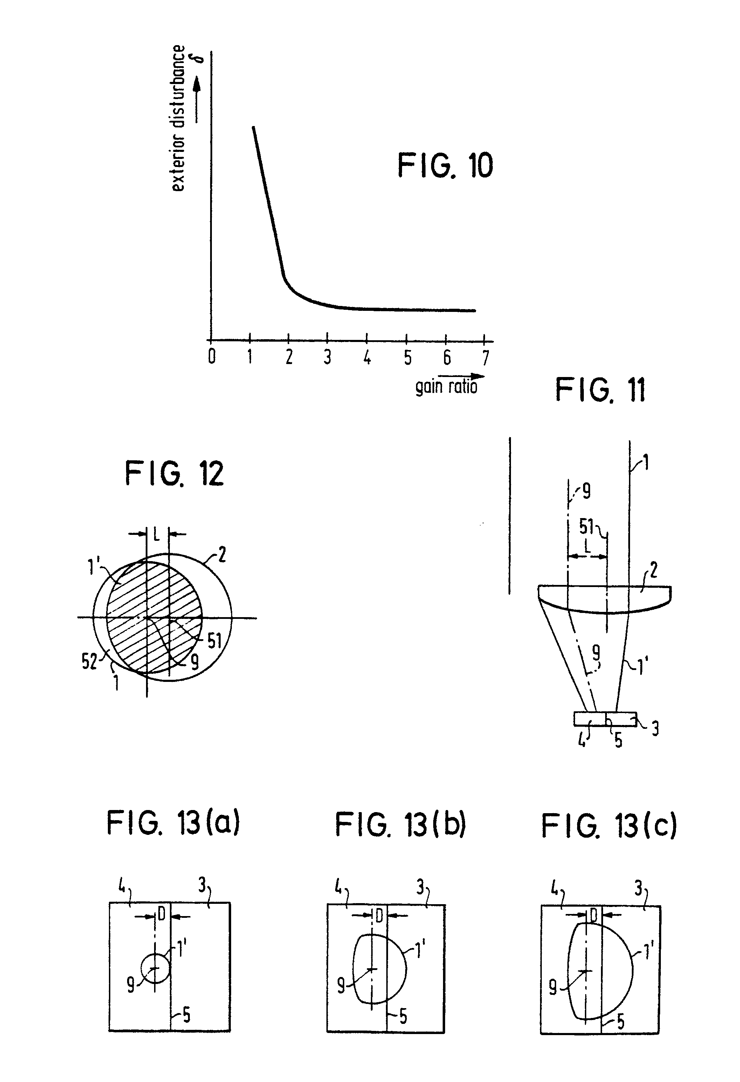

Fig.10 is a diagram illustrating the relation between the gain ratio R and the exterior disturbance δ. As shown in the figure, the gain ratio R higher than approximately 2 provides a fairly low external disturbance. Of course, excessively high gain ratio R is not practical because the boundary 5 is required to be positioned extremely near the edge of the spot, causing an difficult dimensional adjustment regarding the relative location of the laser beam and the photosensor. Thus, the value of from 2 to 4 of the gain ratio R is found most suitable in practice.

In such a manner, the adverse effect of the exterior disturbance to focusing error signals can be reduced according for the present invention. This is one of significant advantages of the present invention.

Now, four embodiments, from the first one to the fourth one, are described. With these embodiments, a masking means or its equivalent means is used to limit partly the incident laser beam onto the photosensor in combination with the apparatus according to Fig.6. As will be seen, the masking means serves to obtain a more sensitive focusing error signals.

Fig.11 is a diagram illustrating the optical system of the first embodiment, and Fig.12 is a plan view of a spot of a laser beam on a condenser lens. A reflected laser beam 1 having an optical axis 9 is incident on a condenser lens 2 having an optical axis 51. As shown in Fig.11, a displacement of L is set between both optical axis 9 and 51, resulting in limiting the quantity of the laser beam to be incident on a photosensor 3 and photosensor 4; only hatched portion of the masked laser beam 1' is incident on the photosensors. Thus the shape of the spot of the laser beam incident on the photosensors 3 and 4 is not a circle but an ellipse as shown in Fig.13(b) and (c). This method is referred to as "wax-wane method". The original optical axis 9 of the laser beam 1 is again displaced from the boundary 5 between photosensor 3 and photosensor 4 by a distance of D. Fig.13(b) shows the spot 1' when the original laser beam is in focus on the surface of the relevant optical disk. Fig.13(a) shows the spot when the focusing point of the original laser beam does not reach the optical disk, becoming a small circle. Fig.13(c) shows the spot when the focusing point passes through the optical disk surface.

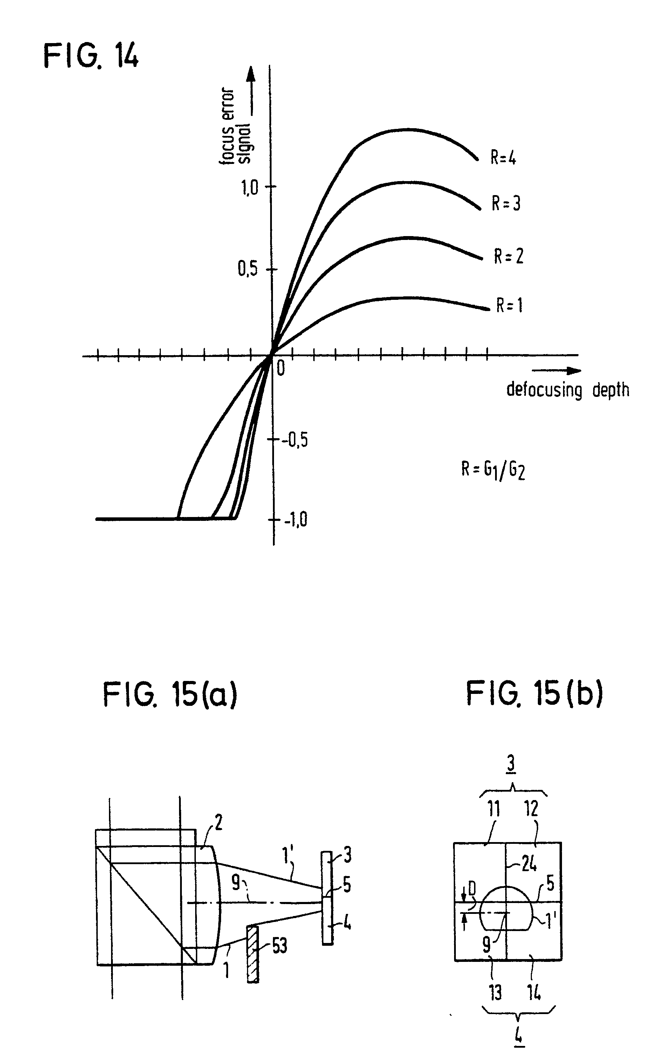

Fig.14 is a diagram illustrating empirical results of the relation between deforcusing distance (abscissa) and focus error signal (ordinate). The gain ratio R is taken as a parameter. In comparison with the results shown in Fig.5, the slope and the linearity of the curves of Fig.14 in a region near by the ordinate is found larger than those of Fig.5 for a given gain ratio R. Furthermore, the curves are more symmetrical with respect to the ordinate than that of the apparatus according to Fig.2. Features of the curves are the same as those of Fig.5. Other merits and features of the first embodiments are the same as those of the apparatus according to Fig.2 or Fig.6.

All the embodiments through the second embodiment to fourth embodiments are modified ones of the first embodiments. The modification is found only in the masking (limiting) means of the relevant laser beam incident on a photosensor array. Like reference numerals found in the associated figures from Fig.15 to Fig.17 denote like parts.

Fig.15(a) is a diagram illustrating the optical system of the second embodiment, and Fig.15(b) is a plan view of a spot of a laser beam on photosensors. Hereby, an optical mask 53 is used, partially masking the laser beam 1 incident on photosensor 3 and photosensor 4. The resulted pattern of the spot 1' on the photosensors is a segment as shown in Fig.15(b).

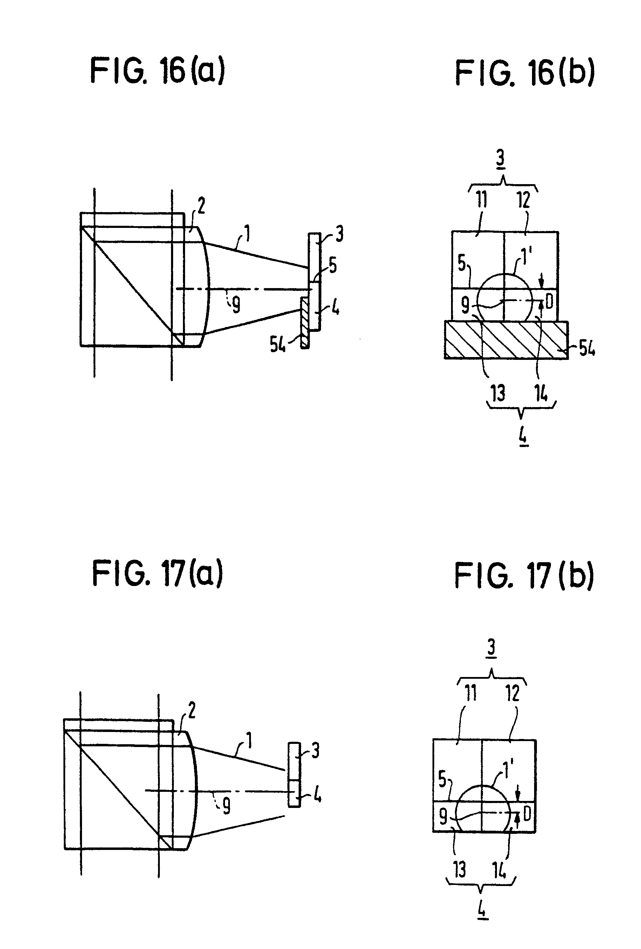

Fig.16(a) is a diagram illustrating the optical system of the third embodiment, and Fig.16(b) is a plan view of a spot of a laser beam on a photosensor array. Hereby, a mask 54 (hatched portions in the figures) is placed immediately on the surface of the associated photosensor 4 instead being placed on the way of the incident laser beam.

Fig.17(a) is a diagram illustrating the optical system of the fourth embodiment, and Fig.17(b) is a plan view of a spot of a laser beam on a photosensor array. In the fourth embodiment, no optical mask is used. As the result, a circular spot of the laser beam is expected. In place of the use of a mask, the photosensor 4 is cut having an edge parallel to the boundary 5 such that a part of the laser beam having a circular cross-section falls off the surface of photosensor 4. Thus the effective pattern of the spot of the laser beam on the photosensors remains the same as that of the preceding embodiments: a segment.

Such masking means of the laser beam incident on the photosensors may have further modifications which are suggested easily by those skilled in the art. However, further description is omitted for short.

The present invention may be embodied in other specific forms without departing from the spirit or essential characteristics thereof. The presently disclosed embodiments are, therefore, to be considered in all respects as illustrative and not restrictive. The scope of the invention is indicated by the applied claims, rather than the foregoing description, and all changes which come within the meaning and the range of equivalency of the claims are, therefore, to be embraced therein.

## EP 0 189 933 B1

**Claims**

1. An optical storage apparatus wherein information is read out by scanning a recording medium formed on a rotable optical disk (100) with an optical beam which is controllably focused on said optical disk (100) by an optical servo means (21, 23) driven by a focus error signal generated by an optical focus servo system, said optical focus servo system comprising:

   a photosensor for converting said optical beam (1) which is reflected at said optical disk (100) and incident on said photosensor, into photoelectric current, comprising at least a first sub-photosensor (3) and a second sub-photosensor (4) both of which are electrically isolated from each other and arranged adjacently on a plane sharing a boundary (5) with each other,

   a condenser lens (2) condensing said reflected optical beam (1) onto said photosensor;

   a first amplifying means (6, 31) having a first amplification factor ($G_1$) and a second amplifying means (7,32) having a second amplification factor ($G_2$) for amplifying individually a first photoelectric current ($I_1$) output from said first sub-photosensor (3) and a second photoelectric current ($I_2$) output from said second sub-photosensor (4), respectively;

   and a subtracter (8, 35) for outputting the differential current between output currents from said first amplifying means (6, 31) and said second amplifying means (7,32) as a focus error signal (F), whereby the axis (9) of said reflected optical beam (1) incident on said photosensor is projected on a fixed line on said second sub-photosensor (4),

   said line being displaced from said boundary (5) between said first sub-photosensor (3) and said second sub-photosensor (4) by a predetermined distance (D) so that

   said first photoelectric current ($I_1$) is lower than said second photoelectric current ($I_2$) when said optical beam is exactly focused on said recording medium formed on said optical disk (100);

   **characterized** in that

   said first amplification factor ($G_1$) and said second amplification factor ($G_2$) are variable and adjustably selected following the formula:

   $$I_{1f}/I_{2f} = G_{2f}/G_{1f},$$

   whereby the suffix f denotes the in focus state, and

   said optical servo system further comprises :

   a masking means (2, 53, 54) for masking said optical beam (1) incident on said second sub-photosensor (4),

   said masking means being realized by limiting the area of said second sub-photosensor (4) such that a part of said optical beam (1) projected onto said second sub-photosensor (4) falls thereon when said optical beam (1) is focused on said optical disk (100).

2. An optical storage apparatus according to claim 1, **characterized** in that said boundary (5) between said first sub-photosensor (3) and said second sub-photosensor (4) is a straight line.

3. An optical storage apparatus according to claim 1 or 2, **characterized** in that the ratio of the first amplification factor ($G_1$) to said second amplification factor ($G_2$), namely $G_1/G_2$, ranges from 2 to 4.

4. An optical storage apparatus according to claim 1, **characterized** in that said masking means is realized by setting the optical axis (51) of said condenser lens (2) apart from the optical axis (9) of said optical beam (1) incident on said second sub-photosensor (4) to the side of said second sub-photosensor (4) by a predetermined distance (L).

5. An optical storage apparatus according to claim 1, **characterized** in that said masking means is a mask (53) disposed between said condensor lens (2) and said photosensor, shading a part of said optical beam (1) from being incident on said second sub-photosensor (4) when said optical beam (4) is focused on said optical disk (100).

6. An optical storage apparatus according to claim 1, **characterized** in that said masking means is a mask (54) disposed immediately on the surface of said second sub-photosensor (4).

7. An optical storage apparatus according to anyone of the preceeding claims, **characterized** in that the subtractor is differential amplifier (8).

9

**EP 0 189 933 B1**

**Revendications**

1. Mémoire optique dans laquelle l'information est lue par exploration d'un support d'enregistrement formé sur un disque optique (100) rotatif au moyen d'un faisceau optique focalisé de façon commandée sur le disque optique (100) par un moyen d'asservissement optique (21, 23) piloté par un signal d'erreur de focalisation généré par un système optique d'asservissement pour la focalisation, ce système optique d'asservissement pour la focalisation comprenant:

   un photocapteur pour convertir le faisceau optique(1), lequel est réfléchi par le disque optique (100) et tombe sur le photocapteur, en un courant photoélectrique, comprenant au moins un premier photocapteur élémentaire (3) et un deuxième photocapteur élémentaire (4) qui sont électriquement isolés l'un de l'autre et disposés adjacents dans un plan, en partageant une limite (5) commune;

   une lentille (2) formant condenseur pour concentrer le faisceau optique réfléchi (1) sur le photocapteur;

   un premier moyen d'amplification (6, 31) ayant une premier gain ($G_1$) et un deuxième moyen d'amplification (7, 32) ayant un deuxième gain ($G_2$) pour amplifier individuellement un premier courant photoélectrique ($I_1$) délivré en sortie par le premier photocapteur élémentaire (3) et un deuxième courant photoélectrique ($I_2$) délivré en sortie par le deuxième photocapteur élémentaire (4) respectivement;

   et un soustracteur (8, 35) pour délivrer en sortie, en tant que signal d'erreur de focalisation (F), le courant différentiel des courants de sortie du premier moyen d'amplification (6, 31) et du deuxième moyen d'amplification (7, 32), l'agencement étant tel que

   l'axe (9) du faisceau optique réfléchi (1), tombant sur le photocapteur, est projeté sur une ligne fixe sur le deuxième photocapteur élémentaire (4), cette ligne étant décalée d'une distance (D) prédéterminée par rapport à la limite (5) entre le premier photocapteur élémentaire (3) et le deuxième photocapteur élémentaire (4), de sorte que le premier courant photoélectrique ($I_1$) est inférieur au deuxième courant photoélectrique ($I_2$) lorsque le faisceau optique est focalisé ou mis au point exactement sur le support d'enregistrement formé sur le disque optique (100);

   caractérisée en ce que

   le premier gain ($G_1$) et le deuxième gain ($G_2$) sont variables et sont choisis de façon réglable suivant la formule:

   $$I_{1f}/I_{2f} = G_{2f}/G_{1f}$$

   où le suffixe f désigne l'état focalisé, et le système optique d'asservissement comprend en outre: un moyen de masquage (2, 53, 54) pour occulter le faisceau optique (1) tombant sur le deuxième photocapteur élémentaire (4), ce moyen de masquage étant réalisé par la limitation de l'aire du deuxième photocapteur élémentaire (4), de manière qu'une partie du faisceau optique (1) projeté sur le deuxième photocapteur élémentaire (4) tombe sur ce photocapteur lorsque le faisceau optique (1) est focalisé sur le disque optique (100).

2. Mémoire optique selon la revendication 1, caractérisée en ce que la limite (5) entre le premier photocapteur élémentaire (3) et le deuxième photocapteur élémentaire (4) est une ligne droite.

3. Mémoire optique selon la revendication 1 ou 2, caractérisée en ce que le rapport du premier gain ($G_1$) au deuxième gain ($G_2$), c'est-à-dire le rapport $G_1/G_2$, est compris dans le domaine allant de 2 à 4.

4. Mémoire optique selon la revendication 1, caractérisée en ce que le moyen de masquage est réalisé par le positionnement de l'axe optique (51) de la lentille (2) formant condenseur à part de l'axe optique (9) du faisceau optique (1) tombant sur le deuxième photocapteur élémentaire (4), à côté de ce deuxième photocapteur élémentaire (4), d'une distance (L) prédéterminée.

5. Mémoire optique selon la revendication 1, caractérisée en ce que le moyen de masquage est un masque (53) disposé entre la lentille (2) formant condenseur et le photocapteur, de manière à occulter une partie du faisceau optique (1) et à empêcher qu'elle tombe sur le deuxième photocapteur élémentaire (4) lorsque le faisceau optique (1) est focalisé sur le disque optique (100).

6. Mémoire optique selon la revendication 1, caractérisée en ce que le moyen de masquage est un

10

masque (54) disposé directement sur la surface du deuxième photocapteur élémentaire (4).

7. Mémoire optique selon l'une quelconque des revendications précédentes, caractérisée en ce que le soustracteur est un amplificateur différentiel (8).

**Patentansprüche**

1. Optisches Speichergerät, bei dem Information durch Abtasten eines auf einer drehbaren optischen Platte (100) ausgebildeten Aufzeichnungsmediums mit einem optischen Strahl ausgelesen wird, der durch eine optische Servoeinrichtung (21, 23) auf der optischen Platte (100) steuerbar fokussiert wird, wobei die optische Servoeinrichtung durch ein Fokusfehlersignal angetrieben wird, das von einem optischen Fokus-Servosystem erzeugt wird,

wobei das optische Fokus-Servosystem umfaßt:

einen Photosensor zur Umwandlung des an der optischen Platte (100) reflektierten und auf den Photosensor auftreffenden optischen Strahls (100) in einen Photostrom, wobei der Photosensor zumindest einen ersten und einen zweiten Sub-Photosensor (3 bzw. 4) aufweist, die elektrisch gegeneinander isoliert und beide nebeneinander auf einer Ebene angeordnet sind, auf der sie eine Grenzlinie (5) gemeinsam haben,

eine Kondensorlinse (2), die den reflektierten optischen Strahl auf den Photosensor konzentriert,

eine erste Verstärkungseinrichtung (6, 31) mit einem ersten Verstärkungsfaktor ($G_1$) und eine zweite Verstärkungseinrichtung (7, 32) mit einem zweiten Verstärkungsfaktor ($G_2$) zum individuellen Verstärken eines von dem ersten Sub-Photosensor (3) abgegebenen ersten Photostroms ($I_1$) bzw. eines von dem zweiten Sub-Photosensor (4) abgegebenen zweiten Photostroms ($I_2$),

und einen Subtrahierer (8, 35) zur Ausgabe des Differenzstroms zwischen den Ausgangsströmen der ersten und der zweiten Verstärkungseinrichtung (6, 31 bzw. 7, 32) als Fokusfehlersignal (F),

wodurch die Achse (9) des auf den Photosensor auftreffenden reflektierten optischen Strahls (1) auf eine feste Linie auf dem zweiten Sub-Photosensor (4) **projiziert wird, wobei** die Linie gegenüber der genannten Grenzlinie (5) zwischen dem ersten und dem zweiten Sub-Photosensor (3 bzw. 4) um einen vorbestimmten Abstand (D) versetzt ist, so daß der erste Photostrom ($I_1$) kleiner ist als der zweite Photostrom ($I_2$), wenn der optische Strahl exakt auf dem auf der optischen Platte (100) ausgebildeten Aufzeichnungsmedium fokussiert ist,

**dadurch gekennzeichnet,**

daß der erste Verstärkungsfaktor ($G_1$) und der zweite Verstärkungsfaktor ($G_2$) variabel und einstellbar so gewählt sind, daß sie der Formel

$$I_{1f}/I_{2f} = G_{2f}/G_{1f}$$

entsprechen, worin der Zusatz f den korrekten Fokussierungszustand angibt,

und daß das optische Fokus-Servosystem weiterhin aufweist:

eine Maskiereinrichtung (2, 53, 24) zum Abschatten des auf den zweiten Sub-Photosensor (4) auftreffenden optischen Strahls (1), wobei diese Maskiereinrichtung dadurch realisiert ist, daß die Fläche des zweiten Sub-Photosensor (4) so begrenzt wird, daß ein Teil des auf den zweiten Sub-Photosensor (4) projizierten optischen Strahls (1) darauf fällt, wenn der optische Strahl (1) auf die optische Platte fokussiert ist.

2. Optisches Speichergerät nach Anspruch 1, dadurch gekennzeichnet, daß die Grenzlinie (5) zwischen dem ersten und dem zweiten Sub-Photosensor (3 bzw. 4) eine gerade Linie ist.

3. Optisches Speichergerät nach Anspruch 1 oder 2, dadurch gekennzeichnet, daß das Verhältnis des ersten Verstärkungsfaktors ($G_1$) zu dem zweiten Verstärkungsfaktor ($G_2$), d.h. $G_1/G_2$, im Bereich von 2 bis 4 liegt.

4. Optisches Speichergerät nach Anspruch 1, dadurch gekennzeichnet, daß die Maskiereinrichtung dadurch realisiert ist, daß die optische Achse der Kondensorlinse (2) gegenüber der optischen Achse (9) des auf den zweiten Sub-Photosensor (4) auftreffenden optischen Strahls (1) um einen vorbestimmten Abstand zur Seite des zweiten Sub-Photosensor (4) versetzt ist.

5. Optisches Speichergerät nach Anspruch 1, dadurch gekennzeichnet, daß die Maskiereinrichtung eine Maske (51) ist, die zwischen der Kondensorlinse (2) und dem Photosensor angeordnet ist und einen Teil des optischen Strahls (1) abschattet, so daß dieser Teil nicht auf den zweiten Sub-Photosensor (4) auftrifft, wenn der optische Strahl (1) auf die optische Platte (100) fokussiert ist.

6. Optisches Speichergerät nach Anspruch 1, dadurch gekennzeichnet, daß die Maskiereinrichtung eine Maske (54) ist, die unmittelbar auf der Oberfläche des zweiten Sub-Photosensor (4) angeordnet ist.

7. Optisches Speichergerät nach einem der vorhergehenden Ansprüche, dadurch gekennzeichnet, daß der Subtrahierer ein Differenzverstärker (8) ist.

# FIG. 1

# FIG. 2

FIG. 3

FIG. 4(a)

FIG. 4(b)

FIG. 4(c)

FIG. 4(d)

# FIG. 5

# FIG. 6

# FIG. 7

# FIG. 8

# FIG. 9(a)

# FIG. 9(b)

# FIG. 9(c)          FIG. 9(d)

FIG. 10

FIG. 11

FIG. 12

FIG. 13(a)    FIG. 13(b)    FIG. 13(c)

## FIG. 14

## FIG. 15(a)

## FIG. 15(b)

# FIG. 16(a)

# FIG. 16(b)

# FIG. 17(a)

# FIG. 17(b)